**Europäisches Patentamt**

**European Patent Office**

**Office européen des brevets**

(19)

(11) Numéro de publication : **0 350 400 B1**

# (12) FASCICULE DE BREVET EUROPEEN

(45) Date de publication du fascicule du brevet :
**15.04.92 Bulletin 92/16**

(51) Int. Cl.⁵ : **B60Q 1/10,** B60Q 1/06

(21) Numéro de dépôt : **89401943.9**

(22) Date de dépôt : **06.07.89**

(54) **Dispositif de réglage de l'orientation d'un réflecteur de projecteur de véhicule automobile.**

(30) Priorité : **07.07.88 FR 8809227**

(43) Date de publication de la demande :
**10.01.90 Bulletin 90/02**

(45) Mention de la délivrance du brevet :
**15.04.92 Bulletin 92/16**

(84) Etats contractants désignés :
**DE ES IT**

(56) Documents cités :
**EP-A- 0 268 442**
**DE-A- 2 237 023**
**FR-A- 2 195 949**
**FR-A- 2 200 808**

(73) Titulaire : **VALEO VISION**
**17, rue Henri Gautier**
**F-93012 Bobigny Cédex (FR)**

(72) Inventeur : **Odille, Maurice**
**81, rue Roger Salengro**
**F-94490 Ormesson (FR)**

(74) Mandataire : **Martin, Jean-Jacques et al**
**Cabinet REGIMBEAU 26, Avenue Kléber**
**F-75116 Paris (FR)**

EP 0 350 400 B1

Jouve, 18, rue Saint-Denis, 75001 PARIS

## Description

La présente invention concerne le réglage de l'orientation d'un réflecteur de projecteur de véhicule automobile, et plus précisément le réglage de l'orientation d'un tel réflecteur dans le sens de la hauteur, aux fins de conserver à un axe optique du projecteur une orientation déterminée par rapport au sol sur lequel circule le véhicule, en dépit de changements d'assiette de celui-ci consécutifs par exemple à son mode de chargement où à l'avachissement de ses suspensions on entendra de façon générale par "réflecteur" aussi bien un réflecteur portant de façon solidaire une glace de fermeture orientable avec ce réflecteur qu'un réflecteur dissocié de sa glace alors fixe par rapport à une pièce de carrosserie du véhicule telle qu'un cuvelage enveloppant le réflecteur.

Dans son brevet français FR-A-2574032, la Demanderesse a décrit un dispositif de réglage de l'orientation d'un réflecteur de projecteur de véhicule automobile par pivotement dudit réflecteur autour d'un premier axe par rapport à des moyens supports, du type comportant à cet effet :
– une biellette susceptible d'être orientée, par rapport aux moyens supports, suivant un deuxième axe approximativement perpendiculaire à un plan incluant le premier axe, ladite biellette présentant une première extrémité susceptible d'être liée au réflecteur en un point décalé par rapport au premier axe et une deuxième extrémité,
– des moyens de guidage de la biellette, portés par les moyens supports et présentant un premier alésage de réception et de guidage de la biellette au coulissement, disposé suivant le deuxième axe, et un deuxième alésage taraudé disposé suivant un troisième axe approximativement perpendiculaire audit deuxième axe,
– une tige filetée reçue dans le deuxième alésage taraudé et coopérant avec lui, ladite tige filetée présentant une première extrémité et une deuxième extrémité,
– des moyens de manoeuvre de la tige filetée à la rotation autour du troisième axe dans le deuxième alésage taraudé, par la première extrémité de la tige filetée,
– des moyens de renvoi d'angle liant cinématiquement les deuxièmes extrémités respectives de la biellette et de la tige filetée, pour traduire une rotation de la tige filetée dans le deuxième alésage taraudé par une translation de la biellette dans le premier alésage.

Ce dispositif connu offre des possibilités intéressantes de réglage fin de l'orientation du réflecteur, soit par des moyens manuels comportant un train d'engrenage monté au-dessus du réflecteur, dans un cuvelage enveloppant celui-ci et constituant à la fois les moyens supports et les moyens de guidage de la biellette, pour permettre de faire tourner la tige filetée dans l'alésage taraudé en intervenant directement au niveau du projecteur correspondant, soit par des moyens télécommandés comportant un vérin agissant sur les moyens de renvoi d'angle à l'opposé de la tige filetée, en remplacement de celle-ci, de façon pilotée par des moyens détecteurs d'assiette du véhicule, c'est-à-dire automatiquement, ou encore de façon commandée manuellement depuis le tableau de bord du véhicule.

Naturellement, le pilotage de l'orientation du réflecteur par des moyens détecteurs d'assiette constitue une solution optimale permettant de garantir une orientation réglementaire de l'axe optique du projecteur quelle que soit l'assiette du véhicule, mais des impératifs de coût limitent le choix d'une telle solution technique à des véhicules de haut de gamme ; bien que nécessitant une intervention manuelle, la télécommande depuis le tableau de bord du véhicule est également avantageuse par sa commodité, mais son coût en limite également la diffusion.

Le réglage manuel de l'orientation du réflecteur par action au niveau du projecteur correspondant est de ce fait largement plus répandu mais il apparaît que, s'il est vrai qu'il autorise des réglages fins de l'orientation du réflecteur, il n'est en fait pratiquement pas utilisé par la majorité des conducteurs d'automobiles qui, une fois le réglage effectué en usine ou en atelier, conservent ce réglage quel que soit l'état de charge du véhicule ou de vieillissement de ses suspensions à moins que, en cherchant à réaliser eux-mêmes un réglage par exemple parce que leur véhicule est appelé à circuler à mi-charge ou à pleine charge, ils ne dérèglent en fait totalement l'orientation des réflecteurs des projecteurs de leur véhicule automobile dans l'un et l'autre cas, l'orientation des réflecteurs des projecteurs du véhicule automobile est incorrecte, la défectuosité du réglage se traduisant généralement par l'éblouissement des conducteurs des véhicules roulant en sens inverse.

Le but de la présente invention est de perfectionner un dispositif de réglage du type décrit dans le brevet français précité, de telle sorte qu'outre une possibilité de réglage manuel fin de l'orientation du réflecteur associé, généralement en usine ou en atelier alors que le véhicule est vide, il offre une possibilité de correction de réglage par tout automobiliste, en fonction notamment de la charge de son véhicule, d'une façon à la fois commode, propre à visualiser la correction effectuée, et ne détruisant pas le réglage fin réalisé en usine ou en atelier de telle sorte qu'un retour à ce réglage soit possible par exemple lorsque, après avoir circulé à pleine charge, le véhicule considéré ne doit plus transporter que son conducteur.

Naturellement, la présente invention vise à conserver dans toute la mesure du possible, outre une possibilité de réglage manuel effectué directement sur le projecteur considéré, une possibilité de réglage télécommandé soit manuellement depuis le tableau de bord du véhicule, soit automatiquement de façon pilotée par des détecteurs d'assiette.

A cet effet, le dispositif selon l'invention, du type indiqué en préambule, se caractérise en ce que les moyens de guidage et les moyens supports sont mutuellement dissociés et présentent des moyens de liaison mutuelle à la translation relative suivant le deuxième axe et en ce que sont prévus des moyens pour régler la position des moyens de guidage par rapport aux moyens supports suivant le deuxième axe, afin d'autoriser une correction de l'orientation du réflecteur en fonction de l'assiette du véhicule.

L'orientation du réflecteur résulte dans un tel cas à la fois de la position de la biellette dans ses moyens de guidage, déterminée par la position angulaire de la tige filetée dans l'alésage taraudé des moyens de guidage, et de la position de ces moyens de guidage par rapport aux moyens supports, déterminée par des moyens spécifiquement prévus à cet effet ainsi, après un réglage en usine ou en atelier effectué par rotation de la tige filetée dans l'alésage taraudé des moyens de guidage de la biellette, alors que le véhicule est vide, on peut sans détruire ce réglage initial corriger l'orientation du réflecteur en fonction de l'assiette du véhicule.

On peut même interdire pratiquement la destruction du réglage initial par une personne non expérimentée si, selon un mode de réalisation préféré du dispositif selon l'invention, alors que les moyens de manoeuvre de la tige filetée consistent de façon particulièrement simple en une conformation de la première extrémité de celle-ci, propre à permettre son actionnement direct à la rotation autour du troisième axe au moyen d'un tournevis ou analogue, les moyens supports comportent une paroi enveloppant une zone des moyens de guidage correspondant au deuxième alésage taraudé et ladite paroi présente un trou de dimension juste suffisante pour permettre le passage dudit tournevis ou analogue, directement en regard, suivant le troisième axe, du deuxième alésage et de la première extrémité de la tige filetée dans une position des moyens de guidage par rapport aux moyens supports correspondant à l'assiette du véhicule à vide.

Dans ces conditions, en effet, dès lors que l'on a réglé la position des moyens de guidage par rapport aux moyens supports dans le sens d'une correction de l'orientation du réflecteur en fonction de l'assiette du véhicule, la première extrémité de la tige filetée est décalée par rapport au trou si bien qu'elle devient inaccessible au tournevis ou analogue.

Avantageusement, les moyens de liaison mutuelle comportent sur les moyens de guidage un manchon disposé autour du premier alésage et suivant le deuxième axe et sur les moyens supports un passage de réception du manchon, disposé selon le deuxième axe ; on est ainsi assuré d'une bonne stabilité des moyens de guidage par rapport aux moyens supports, notamment dans le cas fréquent où ces derniers sont constitués par un cuvelage entourant le réflecteur et réalisé en tôle ou en matière plastique de faible épaisseur.

Alors, selon un mode de mise en oeuvre préféré de la présente invention, le passage et le manchon sont respectivement taraudé et fileté complémentairement et les moyens pour régler la position des moyens de guidage par rapport aux moyens supports suivant le deuxième axe comportent des moyens pour régler la position angulaire du manchon dans le passage autour du deuxième axe ; ces moyens pour régler la position angulaire du manchon peuvent être télécommandés depuis le tableau de bord du véhicule ou pilotés par un détecteur d'assiette mais, de préférence, ils comportent des moyens de préhension manuelle des moyens de guidage, ce qui permet de bénéficier à faible coût des possibilités de correction de l'orientation du réflecteur en fonction de l'assiette du véhicule offertes par la présente invention ; on remarquera que par une forme judicieusement choisie des moyens de préhension manuelle des moyens de guidage, on peut rendre la position angulaire de ces derniers, autour du deuxième axe, facilement visible par l'utilisateur, ce qui permet à ce dernier de visualiser aisément l'absence de correction ou, au contraire, une correction effectuée par exemple pour une circulation à mi-charge ou pour une circulation à pleine charge.

Les positions angulaires du manchon dans le passage correspondant par exemple à l'absence de correction, à la correction en vue d'une circulation à pleine charge et éventuellement à des corrections intermédiaires comme par exemple une correction correspondant à la circulation à mi-charge peuvent être avantageusement prédéterminées ; à cet effet, par exemple, les moyens pour régler la position angulaire du manchon dans le passage comportent des moyens d'encliquetage mutuel des moyens de guidage et des moyens supports dans au moins deux positions angulaires du manchon dans le passage, autour du deuxième axe ; ces moyens d'encliquetage mutuel peuvent être simples de réalisation, et par exemple constitués par un doigt d'encliquetage juxtaposé radialement au manchon, en référence au deuxième axe, et porté élastiquement par les moyens de guidage, et par un col disposé autour du passage et présentant au moins deux encoches de réception du doigt d'encliquetage, mutuellement décalées angulairement en référence au deuxième axe.

Un autre avantage de ce mode de mise en oeuvre préféré de l'invention réside en ce qu'il permet, à partir des mêmes composants, et notamment à partir des mêmes moyens de guidage et des mêmes moyens supports, moyennant quelques modifications mineures et grâce à l'adjonction d'un nombre réduit d'autres composants, de bénéficier non pas d'une possibilité de correction manuelle, directement sur le projecteur concerné, du réglage initial fin réalisé en atelier ou en usine, mais également d'une possibilité de correction télécommandée soit manuellement, à partir du tableau de bord du véhicule, soit de façon pilotée par des détecteurs d'assiette du véhicule.

En effet, selon un autre mode de mise en oeuvre de l'invention, au moins le passage ou le manchon est lisse et les moyens pour régler la position des moyens de guidage par rapport aux moyens supports suivant le deuxième axe comportent des moyens pour régler la position du manchon au coulissement dans le passage suivant le deuxième axe ; alors, avantageusement, les moyens pour régler la position du manchon au coulissement dans le passage comportent un levier articulé sur le manchon autour d'un quatrième axe perpendiculaire au deuxième axe et sur les moyens supports autour d'un cinquième axe parallèle au quatrième axe et des moyens d'actionnement au levier au pivotement autour du cinquième axe, ces moyens d'actionnement pouvant être choisis dans un groupe com portant les moyens hydrauliques ou mécaniques télécommandés lorsqu'on opte pour un tel mode de mise en oeuvre, de préférence, le passage est cylindrique de révolution autour du deuxième axe et des moyens sont prévus pour empêcher une rotation du manchon autour du deuxième axe à l'intérieur dudit passage, comportant un doigt d'encliquetage juxtaposé radialement au manchon, en référence au deuxième axe, et porte par les moyens de guidage, et un col disposé autour du passage et présentant une encoche de réception du doigt d'encliquetage, allongée parallèlement au deuxième axe ; on remarque qu'alors, on peut conserver le filetage prévu sur le manchon dans le cadre du premier mode décrit de mise en oeuvre de l'invention ainsi que le doigt d'encliquetage de préférence également prévu dans ce mode de mise en oeuvre, de même que l'on peut garder les mêmes moyens supports, pourvus d'un passage initialement taraudé que l'on réalaise pour lui donner une forme cylindrique de révolution autour du deuxième axe et supprimer ainsi sa coopération par vissage avec le manchon des moyens de guidage de la biellette une telle solution offre un avantage particulièrement intéressant de standardisation des moyens supports puisqu' il permet de réaliser à volonté un dispositif de réglage autorisant une correction manuelle sur le projecteur concerné lui-même ou une correction manuelle ou automatique télécommandée à partir de composants standardisés, utilisables indifféremment dans un cas et dans l'autre moyennant des transformations simples.

D'autres caractéristiques et avantages d'un dispositif de réglage selon l'invention ressortiront de la description ci-dessous, relative aux deux exemples non limitatifs de mise en oeuvre qui viennent d'être évoqués, ainsi que des dessins annexés qui font partie intégrante de cette description.

– La figure 1 montre une vue d'un projecteur de véhicule automobile équipé d'un dispositif de réglage selon l'invention, partiellement en coupe par un plan approximativement vertical incluant ledit deuxième axe commun à la biellette, au manchon des moyens de guidage et au passage de réception de ce manchon dans les moyens supports, ici constitués par un cuvelage enveloppant le réflecteur ; un tel plan a été repéré en I-I à la figure 2.

– La figure 2 montre une vue partielle du dispositif de réglage, de dessus, dans un sens repéré par une flèche II à la figure 1.

– La figure 3 montre une vue du dispositif de réglage en coupe par un plan perpendiculaire au deuxième axe et repéré en III-III à la figure 1.

– La figure 4 montre, en une vue analogue à celle de la figure 1, un dispositif selon l'invention télécommandable manuellement depuis le tableau de bord du véhicule ou automatiquement, de façon pilotée par des moyens détecteurs d'assiette ; cette vue est également une vue en coupe partielle par un plan approximativement vertical incluant ledit deuxième axe.

– La figure 5 montre une vue du dispositif de réglage de la figure 4 de dessus, dans un sens repéré par une flèche V à la figure 4.

Par convention et sauf indication contraire, les différents composants des deux modes de mise en oeuvre de l'invention illustrés aux figures seront décrits dans les positions relatives qu'ils occupent sur ces figures, correspondant à un réglage initial effectué sur un véhicule vide, par exemple en atelier ou en usine.

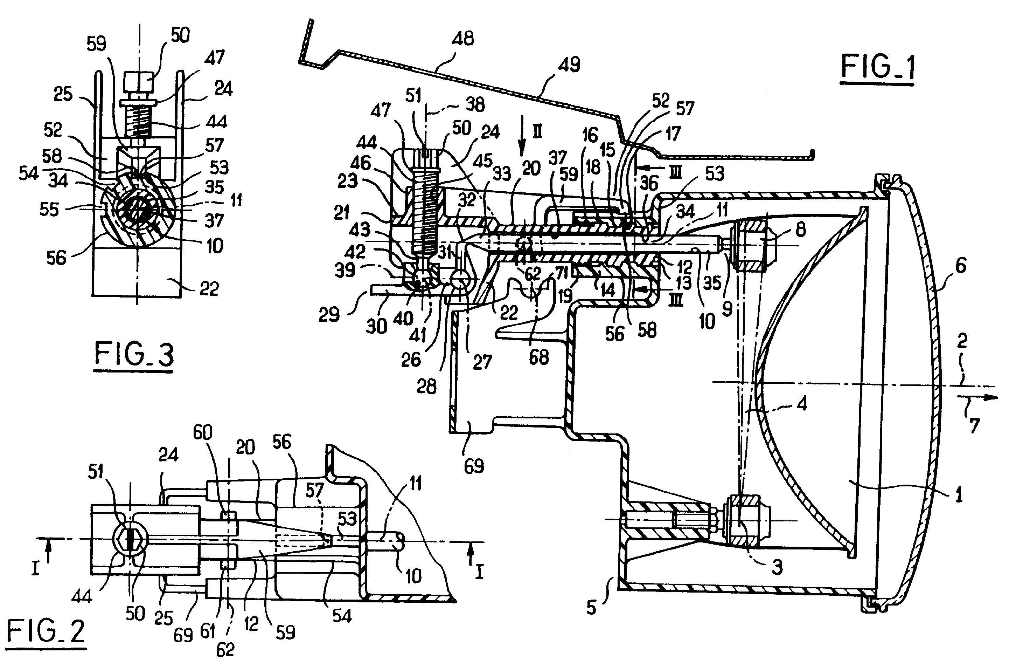

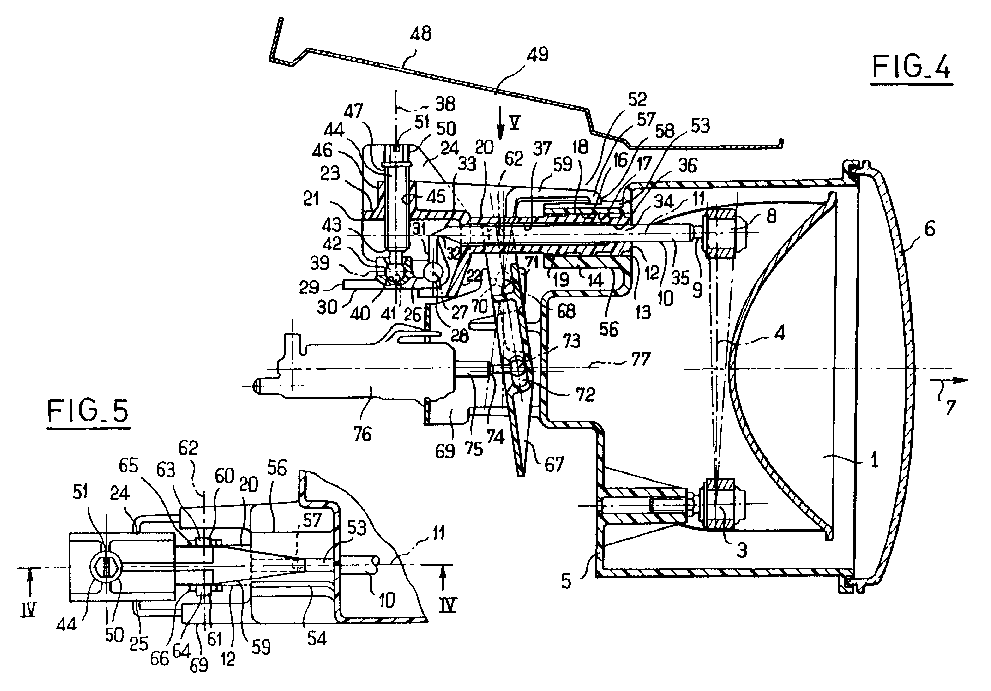

Dans la mesure où les modes de mise en oeuvre de l'invention illustrés respectivement aux figures 1 à 3 et aux figures 4 et 5 comportent des composants communs, ces composants ont été repérés par les mêmes références numériques sur l'ensemble de ces figures et seront décrits de façon commune pour l'ensemble de ces figures, les spécificités propres à chacun des modes de mise en oeuvre de l'invention qui ont été illustrés étant expressément mentionnées.

Aux figures 1 et 4, on a ainsi désigné par 1 un réflecteur de projecteur de véhicule automobile, présentant un axe optique 2 approxima tivement horizontal et monté à la rotation, autour d'un axe 3 également approximativement horizontal mais situé dans un plan 4 approximativement perpendiculaire à l'axe optique 2, sur des moyens supports ici constitués par un cuvelage 5 solidaire de la carrosserie (non représentée) du véhicule et enveloppant par l'arrière le réflecteur 1 devant lequel le cuvelage 5 est fermé par une glace transparente 6 approximativement perpendiculaire à l'axe optique 2 ; ces notions d'avant et d'arrière s'entendent pas référence à un sens déterminé 7 d'émission de lumière par le projecteur, lequel sens 7 est parallèle à l'axe optique 2 et coïncide approximativement avec le sens de marche avant du véhicule ; on remarquera qu'au lieu d'être solidaire du cuvelage 5, la glace 6 pourrait être solidaire du réflecteur 1, d'une façon connue.

L'axe 3 est par exemple défini, de façon connue et non illustrée dans le détail, par deux rotules portées de façon solidaire mais réglable par le cuvelage 5, à un niveau inférieur du réflecteur et en arrière de celui-ci de façon décalée par rapport à l'axe 3, et par exemple à un niveau supérieur du réflecteur 1, vers l'arrière de celui-ci, ce réflecteur coopère par ailleurs, par l'intermédiaire d'une autre articulation à rotule 8, avec une extrémité 9 d'une biellette approximativement rectiligne 10 guidée au coulissement par rapport au cuvelage 5, en arrière du réflecteur 1, suivant un axe 11 approximativement perpendiculaire au plan 4 et par rapport auquel la biellette 10, normalement rectiligne, peut fléchir légèrement par élasticité naturelle du matériau la constituant, tel qu'une matière plastique, pour s'accommoder du fait qu'un réglage de l'orientation du réflecteur 1, par pivotement autour de l'axe 3 par rapport au cuvelage 5, s'accompagne d'un mouvement circulaire de l'articulation à rotule 8 autour de cet axe 3, ce mouvement ne pouvant être considéré qu'approximativement comme un mouvement de translation suivant l'axe 11.

La biellette 10 est guidée à la translation suivant l'axe 11 par rapport au cuvelage 5 par l'intermédiaire d'un manchon 12 lui-même engagé, avec possibilité de déplacement suivant l'axe 11, dans un passage de réception 13 aménagé à cet effet, suivant l'axe 1, dans le cuvelage 5.

Plus précisément, le passage 13 est défini par un trou aménagé suivant l'axe 11 dans le cuvelage 5 et prolongé coaxialement en arrière de celui-ci par un col 14, de forme générale de révolution autour de l'axe 11, par exemple réalisé en une seule pièce de matière plastique avec le cuvelage 5 dans le cas du mode de mise en oeuvre de l'invention illustré aux figures 1 à 3, le passage 13 présente intérieurement, c'est-à-dire vers l'axe 11, un taraudage hélicoïdal 15 à filet trapézoïdal, d'une extrémité avant du passage 13 jusqu'à une zone proche de l'extrémité arrière de ce passage 13 où le taraudage 15 se raccorde à une face périphérique intérieure 16 du passage 13, laquelle face 16 présente une forme cylindrique de révolution autour de l'axe 11 avec un diamètre identique au diamètre maximal du taraudage 15, c'est-à-dire au diamètre à fond de filet de celui-ci ; dans le cas du mode de mise en oeuvre des figures 4 et 5, par contre, le passage 13 est délimité de son extrémité avant à son extrémité arrière par une telle face périphérique intérieure 16 cylindrique de révolution autour de l'axe 11 avec un diamètre correspondant au diamètre maximal du taraudage 15 du mode de mise en oeuvre illustré aux figures 1 à 3, si bien que le passage 13 du mode de mise en oeuvre illustré aux figures 4 et 5 peut être obtenu par usinage d'un cuvelage 5 initialement réalisé en vue de la mise en oeuvre de l'invention selon les figures 1 à 3, de façon à en éliminer le taraudage 15.

Le manchon 12 présente quant à lui, dans le sens d'un éloignement par rapport à l'axe 11, un filetage hélicoïdal 17 complémentaire du taraudage 16 et présentant comme lui une section de filet trapézoïdale ; dans le cas du mode de mise en oeuvre illustré aux figures 1 à 3, ce filetage 17 est en prise avec le taraudage 15 de façon à lier de façon indissociable une translation du manchon 12 à l'intérieur du passage 13, suivant l'axe 11, à une rotation relative autour de cet axe alors que dans le cas du mode de mise en oeuvre illustré aux figures 4 et 5, le taraudage 17 coulisse librement, suivant l'axe 11, contre la face périphérique intérieure 16 du passage 13 avec laquelle il est en contact par les sommets 18 de filet, d'enveloppe cylindrique de révolution autour de l'axe 11 avec un diamètre sensiblement identique à celui de la face périphérique intérieure 16 du passage 13.

Dans une zone du manchon 12 placée en regard de la face périphérique intérieure 16 considérée comme limitée à l'arrière du passage 13, c'est-à-dire comme dans le cas du mode de mise en oeuvre des figures 1 à 3, le filetage 17 est interrompu et remplacé par une pluralité de crêtes 19 annulaires de révolution autour de l'axe 11 avec un diamètre maximal correspondant sensiblement à celui de la face périphérique intérieure 16 du passage 13 de façon à assurer, dans l'un et l'autre des modes de mise en oeuvre de l'invention, une étanchéité entre le manchon 12 et le passage 13.

En arrière des crêtes d'étanchéité 19, le manchon 12 se prolonge hors du col 14, en présentant une face périphérique extérieure 20 cylindrique de révolution autour de l'axe 11 avec un diamètre réduit en comparaison avec le diamètre maximal des crêtes 19 et du filetage 7, jusqu 'à son raccordement solidaire avec une équerre 21 avantageusement réalisée en une seule pièce de matière plastique avec le manchon 12 ; cette équerre 21 présente une première aile 22 ; qui est approximativement plane et perpendiculaire à l'axe 11 et à laquelle le manchon 12 se raccorde directement, et une deuxième aile 23 quant à elle parallèle à l'axe 11, approximativement horizontale et décalée vers le haut par rapport à celui-ci que l'on se réfère aux figures 1 à 3 ou aux figures 4 et 5, et disposée en arrière de la première aile 22 un maintien rigide des deux équerres 21 et 22 dans leur perpendicularité relative est assuré par deux joues plates 24 et 25 solidaires des deux ailes 22 et 23 et avantageusement réalisées en une seule pièce avec ces dernières, lesquelles joues 24 et 25 sont perpendiculaires aux deux ailes 22 et 23 et disposées parallèlement entre elles respectivement de part et d'autre de l'axe 11 ; ces deux ailes 23 et 24 s'étendent au-dessus comme au-dessous de l'aile 23 et, dans le cas du mode de mise en oeuvre des figures 1 à 3, constituent des moyens de préhension manuelle au moyen desquels on peut aisément faire tourner le manchon 12 à l'intérieur du passage 13 pour déplacer le manchon 12 à la translation suivant l'axe 11 par rapport au cuvelage 5, dans un sens ou dans l'autre en fonction du sens dans lequel on fait ainsi tourner le manchon 12 autour de l'axe 11.

En dessous de l'aile 23, c'est-à-dire dans une zone dans laquelle elles raccordent entre elles les deux ailes 22 et 23 de l'équerre 21, les deux joues 24 et 25 présentent des encoches respectives 26 recevant, en un montage tourillonnant autour d'un axe 27 décalé vers le bas par rapport à l'axe 11 mais situé dans un plan (non illustré) perpendiculaire à cet axe 11, des ergots latéraux respectifs tels que 28 d'un levier 29 comportant deux bras plats 30 et 31 disposés sensiblement à 90° l'un par rapport à l'autre et concourant mutuellement suivant l'axe 27 commun aux ergots tels que 28.

Si l'on se réfère à l'orientation du levier 29 illustrée aux figures 1 et 4, le bras 30 est parallèle à la deuxième aile 23 de l'équerre 21, sous cette aile 23 et en arrière de l'axe 27 alors que le bras 31 est approximativement parallèle à l'aile 22 de l'équerre 21, en arrière de cette aile 22 et au-dessus de l'axe 17 tout en restant toutefois en dessous de l'axe 11.

Selon cet axe 11, le bras 31 est articulé, autour d'un axe 32 perpendiculaire à l'axe 11 et parallèle à l'axe 27, à une deuxième extrémité 33 de la biellette 10 avec laquelle le levier à deux bras 29 est avantageusement réalisé en une seule pièce d'une matière plastique dans laquelle l'articulation autour de l'axe 32 est définie par un amincissement localisé ; cette extrémité 33 de la biellette 10 est située en arrière du manchon 12, que la biellette 10 traverse de part en part par un alésage 34 assurant également, au moins de façon localisée, un guidage de la biellette 10 au coulissement relatif suivant l'axe 11 ; à cet effet, alors que la biellette 10 présente une face périphérique extérieure 35 cylindrique de révolution autour de l'axe 11 avec un diamètre déterminé, constant, de la proximité immédiate de son extrémité 9 à la proximité immédiate de son extrémité 33, l'alésage 34 présente vers l'axe 11 une première face périphérique intérieure 36 cylindrique de révolution autour de cet axe 11 avec un diamètre sensiblement identique à celui de la face périphérique extérieure 35 de la biellette 10 dans une zone de l'alésage 34 localisée vers l'avant, alors qu'il présente une deuxième face périphérique intérieure 37 également cylindrique de révolution autour de l'axe 11 mais avec un diamètre supérieur à celui de la face 36 de cette zone localisée de l'alésage 34 jusqu'au débouché de ce dernier vers l'arrière, dans l'aile 22 de l'équerre 21 de façon à autoriser un léger fléchissement de la biellette 10 par rapport à l'axe 11 lors d'une rotation du levier 29 autour de l'axe 27 par rapport aux deux joues 24 et 25 ; les deux faces 36 et 37 de l'alésage 34 sont raccordées mutuellement par un épaulement non référencé, annulaire de révolution autour de l'axe 11 et tourné vers l'arrière.

Vers le haut, c'est-à-dire directement en regard de l'aile 23 de l'équerre 21 suivant un axe 38 orienté approximativement verticalement si l'on se réfère aux figures 1 à 3 et aux figures 4 à 5, et plus précisément perpendiculaire à l'axe 11 ainsi qu'à un plan 39 ici horizontal incluant l'axe 27, le bras 30 du levier 29 présente un logement sphérique 40 dans lequel est encliquetée, avec pour seule possibilité de mouvement relatif une possibilité de rotation relative autour d'un point 41 situé à l'intersection de l'axe 38 et du plan 30 et matérialisant le centre du logement 40, une rotule 42 que porte de façon solidaire une extrémité 43 d'une tige filetée 44 d'axe 38, qui est vissée dans un alésage 45, taraudé complémentairement, aménagé suivant l'axe 38 dans l'aile 23 de l'équerre 21 et, au-dessus de cette aile 23, dans un rebord annulaire 46 que celle-ci porte de façon solidaire vers le haut ; ce rebord 46 est avantageusement réalisé en une seule pièce de matière plastique avec l'aile 23 de l'équerre 21 ; au-dessus du rebord 46, entre les joues 24 et 25, la tige filetée 44 présente une autre extrémité 47 présentant une conformation telle qu'elle puisse venir en prise avec un tournevis ou outil analogue introduit par le dessus, suivant l'axe 38, à travers un trou 48 aménagé dans une paroi telle qu'une tôle 49 solidaire de la carrosserie (non représentée) du véhicule et enveloppant le cuvelage vers le haut ; le trou 48 est calibré de telle sorte que l'introduction du tournevis ou outil analogue en vue de manoeuvrer la tige 44 ne soit possible que lorsque l'extrémité 47 de cette dernière est placée rigoureusement en regard du trou 48, suivant l'axe 38 occupant une orientation verticale ; dans l'exemple illustré, on a ainsi prévu à l'extrémité 47 de la tige 44 une tête six pans 50 pourvue d'un fraisage 51 de réception d'une lame de tournevis, à titre d'exemple non limitatif.

On conçoit ainsi, qu'en tournant volontairement la tête 50 de la tige 44 au moyen d'une tournevis ou outil analogue introduit par le trou 48, et en faisant ainsi tourner la tige 44 à l'intérieur de l'alésage taraudé 45, on provoque un déplacement du bras 30 du levier 29 vers le haut ou vers le bas par pivotement du levier 29 autour de l'axe 27, avec mouvement simultané du bras 31 du levier 29 vers l'avant ou vers l'arrière et, du fait de l'articulation du bras 31 sur la biellette 10 autour de l'axe 32, un mouvement de cette biellette 10 vers l'avant ou vers l'arrière se traduisant lui-même par un pivotement du réflecteur 1 dans un sens ou dans l'autre autour de l'axe 3 par rapport au cuvelage 5, d'une façon voisine de ce qui a été décrit dans le brevet français précité de la Demanderesse.

Ceci correspond à une possibilité de réglage fin de l'orientation du réflecteur 1, réalisé généralement en usine ou en atelier alors que le véhicule est vide.

On remarquera que, du fait du mode d'articulation du bras 30 du levier 29 au moyen d'une rotule sur l'extrémité 43 de la tige 44, ce mouvement peut s'accompagner d'un léger décalage des ergots 28 du levier 29 dans les encoches telles que 26 prévues pour les recevoir dans les joues 24 et 25, vers l'avant ou vers l'arrière ; les encoches telles que 26 présentent à cet effet une forme oblongue suivant une direction approximativement horizontale, d'une façon aisément déterminable par un Homme du métier qui comprendra également que le décalage ainsi subi par l'axe 27 d'articulation du levier 29 sur les joues 24 et 25 constitue un phénomène par ailleurs négligeable.

Pour assurer une correction du réglage fin ainsi effectué initialement sur le véhicule, pour tenir compte des changements d'assiette de celui-ci, on utilise respectivement dans le mode de mise en oeuvre des figures 1 à 3 et dans le mode de mise en oeuvre des figures 4 et 5 des moyens différents qui vont être décrits à présent.

On s'intéressera en premier lieu au mode de mise en oeuvre des figures 1 à 3, dans lequel la correction s'effectue par rotation du manchon 12 autour de l'axe 11 à l'intérieur de l'alésage 13, cette rotation étant imprimée manuellement par préhension des joues 24 et 25 ; on conçoit aisément que, alors que la biellette 10 reste fixe suivant l'axe 11 par rapport au manchon 12 du fait que l'on n'intervient pas sur la tige filetée 44, la coopération du filetage 17 du manchon 12 avec le taraudage 15 de l'alésage 13 traduit cependant une telle action manuelle de rotation du manchon 12 à l'intérieur de l'alésage 13 par une translation de la biellette 10 suivant l'axe 11 par rapport au cuvelage 5, c'est-à-dire par une modification de l'orientation du réflecteur 1 autour de l'axe 3 par rapport à ce même cuvelage.

On remarquera que dès lors que l'on a ainsi provoqué une rotation du manchon 12 autour de l'axe 11 à l'intérieur du passage 13, à partir d'une position dans laquelle l'axe 38 est vertical et la tête 50 de la tige filetée 44 placée directement en regard du trou 48 de la tôle 49, cette tête 50 ainsi décalée angulairement, autour de l'axe 1, par rapport au trou 48 devient inaccessible pour un tournevis ou outil analogue introduit par ce trou 48 en raison du calibrage étroit de ce dernier si bien que toute modification du réglage initial par rotation de la tige filetée 44 dans l'alésage taraudé 45, avec translation de la biellette 10 suivant l'axe 11 à l'intérieur du manchon 2, devient impossible.

De préférence, des moyens sont prévus pour immobiliser, de façon amovible, le manchon 12 à la rotation à l'intérieur du passage 13 autour de l'axe 11 dans plusieurs orientations angulaires relatives déterminées.

Ces moyens sont avantageusement constitués par des moyens d'encliquetage 52 comportant :
– d'une part, une pluralité d'encoches en forme de gorges rectilignes 53, 54, 55, parallèles à l'axe 11 et mutuellement décalées angulairement en référence à cet axe, ces gorges étant aménagées dans une face périphérique extérieure 56, cylindrique de révolution autour de l'axe 11, du col 14,
– d'autre part, un doigt 57 orienté radialement par rapport à l'axe 11 et tourné vers ce dernier, lequel doigt 57 est porté par le manchon 12 et sollicité élastiquement vers l'axe 11 de façon à pouvoir s'engager dans l'une des gorges 53, 54, 55 en fonction de l'orientation du manchon 12 autour de l'axe 11 à l'intérieur du passage 13, tout en pouvant se dégager de cette gorge lorsqu'on applique aux joues 24, 25 un couple de rotation autour de l'axe 11 avec un moment suffisant pour vaincre la résistance due à l'engagement élastique du doigt 57 dans la gorge respective 53, 54, 55 ; à cet effet, alors que chaque gorge 53, 54, 55 présente une section sensiblement rectangulaire lorsqu'elle est vue en coupe par un plan perpendiculaire à l'axe 11, comme c'est le cas à la figure 3, le doigt 57 présente vers l'axe 1 une extrémité convexe 58 par laquelle il s'engage dans la gorge 53, 54, 55 respective.

Dans l'exemple illustré, le doigt 57 est réalisé en une seule pièce de matière plastique avec le manchon 12, à la face périphérique extérieure 20 duquel il est relié par un bras en porte-à-faux 59 lui communiquant la sollicitation élastique vers l'axe 11 requise par son engagement sélectif dans l'une des gorges 53, 54, 55.

On remarquera que l'on a prévu dans l'exemple illustré trois gorges 53, 54, 55 déterminant, par engagement du doigt 57, les positions angulaires du manchon 12 à l'intérieur du passage 13 en référence à l'axe 11 correspondant respectivement a un véhicule à vide (orientation illustrée permettant le réglage fin à travers le trou 48), à une correction en vue d'une circulation à mi-charge et à une correction en vue d'une circulation à pleine charge, mais ce nombre de gorges ne constitue qu'un exemple non limitatif et pourrait être limité à deux, de même qu'il pourrait être supérieur à trois.

Pour des raisons de standardisation, on retrouve dans le cas du mode de mise en oeuvre des figures 4 et 5 le doigt 57, porté par le bras en porte-à-faux 59 du manchon 12, et les gorges 53, 54, 55 de la face périphérique extérieure 56 du col 14, mais le doigt 57 ne coopère dans ce cas par son extrémité 58 qu'avec la gorge 53, le long de laquelle il peut coulisser parallèlement à l'axe 11 en contribuant à maintenir le manchon 12 dans une orientation telle que l'axe 38 soit vertical, tout en autorisant une translation du manchon 12 à l'intérieur du passage 13 suivant l'axe 11 en vue d'assurer une correction de l'orientation du réflecteur 1 autour de l'axe 3 par rapport au cuvelage 5 en fonction de l'assiette du véhicule.

En vue d'autoriser son entraînement en vue d'une telle translation, le manchon 2 porte de façon solidaire, par sa face périphérique extérieure 20, deux tourillons 60 et 61 en saillie, diamétrale ment opposés suivant un même axe 62 perpendiculaire à l'axe 1 et, dans l'exemple illustré, parallèle à l'axe 27 bien que cette condition ne soit pas impérative ; on remarquera que les tourillons 60 et 61 d'axe 62 sont également présents dans le cas du mode de mise en oeuvre de l'invention illustré aux figures 1 à 3, auquel cas ils restent cependant inutilisés.

Chacun des tourillons 60 et 61 est engagé, avec possibilité de rotation relative autour de l'axe 62, dans une chape 63, 64 d'un bras respectif 65, 66 d'un levier 67 présentant la forme générale d'une fourche chevauchant la face périphérique extérieure 20 du manchon 12 au niveau des tourillons 60 et 61, par le bas dans l'exemple illustré.

En dessous du manchon 12 dans cet exemple, le levier 67 est articulé autour d'un axe 68, parallèle à l'axe 62, sur un berceau 69 solidaire du cuvelage 5 avec lequel il est avantageusement réalisé en une seule pièce de matière plastique à cet effet, le levier 67 présente par exemple deux tourillons tels que 70 disposés suivant l'axe 68 et reçus dans des chapes respectives telles que 71 du berceau 69 ; on remarquera qu'une rotation du levier 67 autour de l'axe 68 par rapport au berceau 69, dans un sens ou dans l'autre, se traduit par un coulissement du manchon 12 à l'intérieur du passage 13 suivant l'axe 11 dans un sens ou dans l'autre, respectivement, les chapes 63 et 64 des bras 65 et 66 du levier 67 étant oblongues suivant une direction radiale en référence à l'axe 68 pour tenir compte de ce qu'elles se déplacent suivant un arc de cercle centré sur cet axe alors que le tourillons 60 et 61 ne peuvent accomplir qu'un mouvement rectiligne suivant l'axe 11.

A l'intérieur du berceau 69, à l'opposé de l'axe 62 par rapport à l'axe 68, le levier 67 présente vers l'arrière un logement 72 susceptible de recevoir, par encliquetage élastique, une rotule 73 que porte de façon solidaire une extrémité 74 d'une tige 75 d'un vérin 76 reçu de façon solidaire par le berceau 69, en arrière du levier 67, dans une position telle que sa tige 75 présente un axe 77 parallèle à l'axe 11 et suivant lequel cette tige 75 peut se déplacer à la translation lorsqu'on actionne le vérin 76 ; on remarquera que le logement 72 présente une forme oblongue suivant une direction radiale en référence à l'axe 68 pour s'accommoder de ce que le levier 67 ne peut que pivoter autour de cet axe alors que la rotule 73 de l'extrémité 74 de la tige 75 du vérin 76 ne peut quant à elle se déplacer qu'à la translation suivant l'axe 77 ; toutefois, suivant cet axe 77, la rotule 73 est reçue étroitement dans le logement 72 de telle sorte que la tige 75 du vérin 76 et le levier 67 se déplacent à l'unisson.

Le vérin 76 peut être raccordé, de façon connue en soi et non représentée, soit à des moyens de commande manuelle placés au tableau de bord du véhicule, soit à des capteurs d'assiette de ce véhicule pour autoriser alors une correction automatique d'un réglage initial effectué, en usine ou en atelier, par rotation de la tige filetée 44 dans l'alésage 45 de l'aile 23 de l'équerre 21 afin de tenir compte de l'assiette du véhicule ; de façon connue en soi, le vérin 76 peut être mécanique ou hydraulique.

On remarquera que toute translation de la tige 75 du vérin 76 suivant l'axe 77 alors que le manchon 12 occupait initialement dans le passage 13 une position correspondant à un strict alignement de l'axe 38 avec le trou 48 se traduit par l'introduction d'un décalage entre l'axe 38 et le trou 48, c'est-à-dire par une impossibilité d'actionner à nouveau la tête 50 de la tige filetée 44 au moyen d'un tournevis ou outil analogue introduit par ce trou 48.

On remarquera également que la coopération du manchon 12 par les tourillons 60 et 61 avec le levier 67, coopérant lui-même par les tourillons tels que 70 avec les chapes telles que 71 du berceau 69, contribue à maintenir l'axe 38 dans une orientation constante autour de l'axe 11 par rapport au cuvelage 5, a savoir dans l'exemple illustré dans une orientation verticale, correspondant également à l'engagement de l'extrémité 58 du doigt 57 dans la gorge 53 ; les gorges 54 et 55 sont dénuées de fonction dans ce mode de mise en oeuvre de l'invention, de même que le berceau 69, prévu également dans le cas du mode de réalisation des figures 1 à 3 pour des raisons de standardisation de la fabrication du cuvelage 5 est dénué de fonction dans ce mode de mise en oeuvre illustré aux figures 1 à 3.

Naturellement, les modes de mise en oeuvre de l'invention qui viennent d'être décrit ne constituent que des exemples non limitatifs ; on remarquera cependant que ces modes de mise en oeuvre présentent l'avantage important d'être accessibles à partir d'un même cuvelage 5, y compris les éléments tels que le col 14 et le berceau 69 de préférence réalisés en une seule pièce avec lui, d'un même manchon 12 considéré dans son ensemble, c'est-à-dire avec les éléments avantageusement réalisés en une seule pièce avec lui tels que l'équerre 21, les joues 24 et 25 et le bras 59 portant le doigt 57, et d'une même biellette 10 considérée dans son ensemble avec les éléments avantageusement réalisés en une pièce avec elle, a savoir le levier 29 et les moyens de guidage de celui-ci à la rotation autour de l'axe 27 par rapport aux joues 24 et 25 et d'articulation sur la rotule 42 de la tige filetée 44 elle-même conservée sous une forme inchangée ; à partir de ces pièces standardisées, le choix d'un mode de mise en oeuvre propre à une télécommande, illustré aux figures 4 et 5, se traduit simplement par la suppression du taraudage 15 du passage 13 du cuvelage 5 et par le montage du levier 67, du vérin 76 et des moyens de liaison de ce dernier avec le tableau de bord du véhicule ou avec des capteurs d'assiette du véhicule, ce qui est particulièrement simple.

## Revendications

1. Dispositif de réglage de l'orientation d'un réflecteur (1) de projecteur de véhicule automobile par pivotement dudit réflecteur (1) autour d'un premier axe (3) par rapport à des moyens supports (5), du type comportant à cet effet :
    – une biellette (10) susceptible d'être orientée, par rapport aux moyens supports (5), suivant un deuxième axe (11) approximativement perpendiculaire à un plan (4) incluant le premier axe (3), ladite biellette (10) présentant une première extrémité (9) susceptible d'être liée au réflecteur (1) en un point (8) décalé par rapport au premier axe (3), et une deuxième extrémité (33),
    – des moyens (12) de guidage de la biellette (10), portés par les moyens supports (5) et présentant un premier alésage (34) de réception et de guidage de la biellette (10) au coulissement disposé suivant le deuxième axe (11) et un deuxième alésage (45) taraudé disposé suivant un troisième axe (38) approximativement perpendiculaire au deuxième axe (11),
    – une tige filetée (44) reçue dans le deuxième alésage taraudé (45) et coopérant avec lui, ladite tige filetée (44) présentant une première extrémité (47) et une deuxième extrémité (43),
    – des moyens (50, 51) de manoeuvre de la tige filetée (44) à la rotation autour du troisième axe (38) dans le deuxième alésage taraudé (45), par la première extrémité (47) de la tige filetée (44),
    – des moyens (29) de renvoi d'angle liant cinématiquement les deuxièmes extrémités respectives (33, 43) de la biellette (10) et de la tige filetée (44), pour traduire une rotation de la tige filetée (44) dans le deuxième alésage taraudé (43) par une translation de la biellette (10) dans le premier alésage (34),
    caractérisé en ce que les moyens de guidage (12) et les moyens supports (5) sont mutuellement dissociés et présentent des moyens (12, 13, 14, 15, 16, 17) de liaison mutuelle à la translation relative suivant le deuxième axe (11) et en ce que sont prévus des moyens (24, 25, 52, 67, 76) pour régler la position des moyens de guidage (12) par rapport aux moyens supports (5) suivant le deuxième axe (11), afin d'autoriser une correction de l'orientation du réflecteur (1) en fonction de l'assiette du véhicule.

2. Dispositif selon la revendication 1, caractérisé en ce que les moyens (50, 51) de manoeuvre de la tige filetée (44) consistent en une conformation de la première extrémité (47) de celle-ci, propre à permettre son actionnement direct à la rotation autour du troisième axe (38) au moyen d'un tournevis ou analogue, en ce que les moyens supports (5) comportent une paroi (49) enveloppant une zone des moyens de guidage (12) correspondant au deuxième alésage taraudé (45) et en ce que ladite paroi (49) présente un trou (48) de dimensions juste suffisantes pour permettre le passage du tournevis ou analogue, directement en regard, suivant le troisième axe (38), du deuxième alésage (45) et de la première extrémité (47) de la tige filetée (44) dans une position des moyens de guidage (12) par rapport aux moyens supports (5) correspondant à l'assiette du véhicule à vide.

3. Dispositif selon l'une quelconque des revendications 1 et 2, caractérisé en ce que les moyens de liaison mutuelle (12, 13, 14, 15, 16, 17) comportent sur les moyens de guidage (12) un manchon (12) disposé autour du premier alésage (34) et suivant le deuxième axe (11) et sur les moyens supports (5) un passage (13) de réception du manchon (12), disposé selon le deuxième axe (11).

4. Dispositif selon la revendication 3, caractérisé en ce que le passage (13) et le manchon (12) sont respectivement taraudé (15) et fileté (17) complémentairement et en ce que les moyens (24, 25, 52, 67, 76) pour régler la position des moyens de guidage (12) par rapport aux moyens supports (5) suivant le deuxième axe (11) comportent des moyens (24, 25, 52) pour régler la position angulaire du manchon (12) dans le passage (13) autour du deuxième axe (11).

5. Dispositif selon la revendication 4, caractérisé en ce que les moyens (24, 25, 52) pour régler la position angulaire du manchon (12) dans le passage (13) comportent des moyens (24, 25) de préhension manuelle des moyens de guidage (12) et des moyens (52) d'encliquetage mutuel des moyens de guidage (12) et des moyens supports (5) dans au moins deux positions angulaires du manchon (12) dans le passage (13) autour du deuxième axe (11).

6. Dispositif selon la revendication 5, caractérisé en ce que les moyens (52) d'encliquetage mutuel comportent un doigt d'encliquetage (57) juxtaposé radialement au manchon (12), en référence au deuxième axe (11), et porté élastiquement par les moyens de guidage (12), et un col (14) disposé autour du passage (13) et présentant au moins deux encoches (53, 54, 55) de réception du doigt d'encliquetage (57), mutuellement décalées angulairement en référence au deuxième axe (11).

7. Dispositif selon la revendication 3, caractérisé en ce qu'au moins le passage (13) ou le manchon (12) est lisse et en ce que les moyens (24, 25, 52, 67, 76) pour régler la position des moyens de guidage (12) par rapport aux moyens supports (5) suivant le deuxième axe (11) comportent des moyens (67, 76) pour régler la position du manchon (12) au coulissement dans le passage (13) suivant le deuxième axe (11).

8. Dispositif selon la revendication 7, caractérisé en ce que les moyens (67, 76) pour régler la position du manchon (12) au coulissement dans le passage (13) comportent un levier (67) articulé sur le manchon (12) autour d'un quatrième axe (62) perpendiculaire au deuxième axe (11) et sur les moyens supports (5) autour d'un cinquième axe (68) parallèle au quatrième axe (62), et des moyens (76) d'actionnement du levier (67) au pivotement autour du cinquième axe (68).

9. Dispositif selon la revendication 8, caractérisé en ce que les moyens d'actionnement (76) sont choisis dans un groupe comportant les moyens hydrauliques ou mécaniques télécommandés.

10. Dispositif selon l'une quelconque des revendications 7 à 9, caractérisé en ce que le passage (13) est cylindrique de révolution autour du deuxième axe (11) et en ce que sont prévus des moyens (52, 67) pour empêcher une rotation du manchon (12) autour du deuxième axe (11) à l'intérieur dudit passage (13), comportant un doigt d'encliquetage (57) juxtaposé radialement au manchon (12), en référence au deuxième axe (11), et porté par les moyens de guidage (12), et un col (14) disposé autour du passage (13) et présentant une encoche (53) de réception du doigt d'encliquetage (57), allongée parallèlement au deuxième axe (11).


**Patentansprüche**

1. Steuerungseinrichtung der Neigung eines Kraftfahrzeugscheinwerfers (1) durch Schwenken des genannten reflektors (1) um eine erste Achse (3) im Verhältnis zu Stützmitteln (5), zu diesem Zweck enthaltend:
– eine Stange (10), die im Verhältnis zu den Stützmitteln (5) entlang einer zweiten Achse (11) geneigt werden kann, die etwa lotrecht zu einer Ebene (4) verläuft, welche die erste Achse (3) einschließt, wobei die genannte Stange (10) ein erstes Ende (9), welches an einem Punkt (8), der im Verhältnis zur ersten Achse (3) versetzt ist, mit dem reflektor (1) verbunden werden kann, und ein zweites Ende (33) besitzt,
– Mittel (12) zur Führung der Stange (10), auf den Stützmitteln (5) ruhend und versehen mit einer ersten Bohrung (34) zur Aufnahme und Führung der Stange (10) für die Gleitbewegung entlang der zweiten Achse (11), und einer zweiten Gewindebohrung (45), die entlang einer dritten Achse (38) etwa lotrecht zur zweiten Achse (11) angeordnet ist,
– eine Gewindespindel (44) mit Sitz in der zweiten Gewindebohrung (45) und damit zusammenwirkend, wobei die genannte Gewindespindel (44) ein erstes Ende (47) und ein zweites Ende (43) aufweist,
– Mittel (50, 51) zur Betätigung der Gewindespindel (44) bei der Drehung um die dritte Achse (38) in der zweiten Gewindebohrung (45) durch das erste Ende (47) der Gewindespindel (44),
– Mittel (29) für die Winkelumkehr, wodurch die jeweiligen zweiten Enden (3.3, 43) der Stange (10) und der Gewindespindel (44) kinematisch miteinander verbunden sind, um eine Drehbewegung der Gewindespindel (44) in der zweiten Gewindebohrung (43) in eine translatorische Bewegung der Stange (10) in der ersten Bohrung (34) umzuwandeln,

dadurch **gekennzeichnet** , daß die Führungsmittel (12) und die Stützmittel (5) voneinander getrennt sind und Mittel (12, 13, 14, 15, 16, 17) zur gegenseitigen Verbindung bei der translatorischen Bewegung entlang der zweiten Achse (11) aufweisen, und daß Mittel (24, 25, 52, 67, 76) zur Einstellung der Position der Führungsmittel (12) im Verhältnis zu den Stützmitteln (5) entlang der zweiten Achse (11) vorgesehen sind, um eine Korrektur der Neigung des reflektors (1) entsprechend der Trimmlage des Fahrzeugs zu ermöglichen.

2. Vorrichtung nach Anspruch 1, dadurch **gekennzeichnet** , daß die Mittel (50, 51) zur Betätigung der Gewindespindel (44) aus einer Ausbildung des ersten Endes (47) derselben bestehen, die eine direkte Drehung um die dritte Achse (38) mittels eines Schraubenziehers oder eines ähnlichen Geräts erlaubt, daß die Stützmittel (5) eine Wand (49) enthalten, die eine Zone der Führungsmittel (12) umgibt, welche der zweiten Gewindebohrung (45) entspricht, und daß die genannte Wand (49) ein Loch (48) aufweist, dessen Abmessungen gerade ausreichen, um die Einführung des Schraubenziehers oder ähnlichen Geräts, unmittelbar gegenüber, entlang der dritten Achse (38), der zweiten Bohrung (45) und dem ersten Ende (47) der Gewindespindel (44) in einer Position der Führungsmittel (12) im Verhältnis zu den Stützmitteln (5) zu ermöglichen, die der Trimmlage des Fahrzeugs im leeren Zustand entspricht.

3. Vorrichtung nach einem der Ansprüche 1 und 2, dadurch **gekennzeichnet** , daß die Mittel zur gegenseitigen Verbindung (12, 13, 14, 15, 16, 17) an den Führungsmitteln (12) eine Muffe (12) aufweisen, die rund um die erste Bohrung (34) und entlang der zweiten Achse (11) angeordnet ist, und an den Stützmitteln (5) einen Durchtritt (13) zur Aufnahme der Muffe (12), angeordnet entsprechend der zweiten Achse (11).

4. Vorrichtung nach Anspruch 3, dadurch **gekennzeichnet** , daß der Durchtritt (13) und die Muffe (12) mit Schneidgewinde (15) und Außengewinde (17) zusammenpassend versehen sind und daß die Mittel (24, 25, 52, 27, 76) zur Einstellung der Position der Führungsmittel (12) im Verhältnis zu den Stützmitteln (5) entlang der zweiten Achse (11) Mittel (24, 25, 52) enthalten, um die Winkelposition der Muffe (12) im Durchtritt (13) rund um die zweite Achse (11) zu regulieren.

5. Vorrichtung nach Anspruch 4, dadurch **gekennzeichnet** , daß die Mitte1 (24, 25, 52) zur Einstellung der Winkelstellung der Muffe (12) im Durchtritt (13) Mittel (24, 25) zum manuellen Ergreifen der Führungsmittel (12) und der gegenseitigen Einrastmittel (52) zwischen den Führungsmitteln (12) und den Stützmitteln (5) in wenigstens zwei Winkelpositionen der Muffe (12) im Durchtritt (13) rund um die zweite Achse (11) aufweisen.

6. Vorrichtung nach Anspruch 5, dadurch **gekennzeichnet** , daß die gegenseitigen Einrastmittel (51) einen Einrastfinger (57) aufweisen, der radial neben der Muffe (12) im Verhältnis zur zweiten Achse (11) angeordnet ist, und der elastisch auf den Führungsmitteln (12) aufliegt, sowie einen Hals (,14), der den Durchtritt (13) umgibt und wenigstens zwei Einschnitte (53, 54, 55) zur Aufnahme des Einrastfingers (57) aufweist, die zueinander im Winkel im Verhältnis zur zweiten Achse (11) versetzt sind.

7. Vorrichtung nach Anspruch 3, dadurch **gekennzeichnet** , daß zumindest der Durchtritt (13) oder die Muffe (12) glatt ist und daß die Mittel (24, 25, 52, 67, 76) zur Einstellung der Position der Führungsmittel (12) im Verhältnis zu den Stützmitteln (51 entlang der zweiten Achse (11) Mittel (67, 76) zur Regulierung der Position der Muffe (12) bei der Gleitbewegung im Durchtritt (13) entlang der zweiten Achse (11) aufweisen.

8. Vorrichtung nach Anspruch 7, dadurch **gekennzeichnet** , daß die Mittel (67, 76) zur Einstellung der Position der Muffe (11) bei der Gleitbewegung im Durchtritt (13) einen Hebel (67) aufweisen, der gelenkig an der Muffe (12) rund um eine vierte Achse (62) angebracht ist, die lotrecht zur zweiten Achse (11) und an den Stützmitteln (5) rund um eine fünfte Achse (68) parallel zur vierten Achse (62) verläuft, und Mittel (76) zur Betätigung des Hebels (67) bei der Schwenkbewegung um die fünfte Achse (68).

9. Vorrichtung nach Anspruch 8, dadurch **gekennzeichnet** , daß die Betätigungsmittel (76) aus einer Gruppe ausgewählt werden, die hydraulische oder ferngesteuerte mechanische Mittel einschließt.

10. Vorrichtung nach einem der Ansprüche 7 bis 9, dadurch **gekennzeichnet** , daß der Durchtritt (13) zylindrisch ist und um die zweite Achse (11) rotiert und daß Mittel (52, 67) vorgesehen sind, um eine Drehbewegung der Muffe (12) rund um die zweite Achse (11) im Innern des genannten Durchtritts (13) ,zu verhindern, enthaltend einen Einrastfinger (57), der im Verhältnis zur zweiten Achse (11) radial neben der Muffe (12) liegt und auf Führungsmitteln (12) aufliegt, sowie einen Hals (14), der den Durchtritt (13) umgibt und einen Einschnitt (53) zur Aufnahme des Einrastfingers (57), parallel zur zweiten Achse (11) verlängert, aufweist.

**Claims**

1. An adjusting device for the orientation of a reflector (1) of a motor vehicle headlamp by pivoting the said reflector (1) about a first axis (3) with respect to support means (5), of the type comprising for this purpose:
 – a rod (10) adapted to be orientated with respect to the support means (5) along a second axis (11) which is approximately perpendicular to a plane (4) containing the first axis (3), the said rod (10) having a first end (9) adapted to be connected to the reflector (1) at a point (8) which is offset with respect to the first axis (3), and a second end (33),
 – guide means (12) for the rod (10), carried by the support means (5) and having a first bore (34) for receiving and guiding the rod (10) for sliding movement therein and disposed on the second axis (11), and a threaded second bore (45) disposed along a third axis (38) which is approximately perpendicular to the second axis (11),
 – a screw threaded pin (44) received in the threaded second bore (45) and cooperating therewith, the said threaded pin (44) having a first end (47) and a second end (43),
 – means (50, 51) for manoeuvring the threaded pin (44) in rotation about the third axis (38) in the threaded second bore (45) by means of the first end (47) of the threaded pin (44),
 – angle-transmission means (29) kinematically coupling the respective second ends (33, 43) of the rod (10) and threaded pin (44) whereby to convert rotation of the threaded pin (44) in the threaded second bore (43) into straight line movement of the rod (10) in the first bore (34),
 characterised in that the guide means (12) and the support means (5) are dissociated from each other and have means (12, 13, 14, 15, 16, 17) for mutual coupling in the relative straight line movement along the second axis (11), and in that means (24, 25, 52, 67, 76) are provided for adjusting the position of the guide means (12) with respect to the support means (5) along the second axis (11), whereby to enable the orientation of the reflector (1) to be corrected according to the attitude of the vehicle.

2. A device according to Claim 1, characterised in that the means (50, 51) for manoeuvring the threaded pin (44) comprise a conformation of the first end (47) of the latter, adapted so that it can act direct on rotation about the third axis (38) by means of a screwdriver or the like, in that the support means (5) include a wall (49) enveloping a zone of the guide means (12) corresponding to the threaded second bore (45), and in that the said wall (49) is formed with a hole (48) the dimensions of which are just sufficient to enable the screwdriver or the like to pass through, being directly in line along the third axis (38) with the second bore (45) and the first end (47) of the threaded pin (44) in a position of the guide means (12) with respect to the support means (5) corresponding to the attitude of the vehicle when the latter is empty.

3. A device accoding to either Claim 1 or Claim 2, characterised in that the mutual coupling means (12, 13, 14, 15, 16, 17) include on the guide means (12) a sleeve (12) which is disposed around the first bore (34) and along the second axis (11), together with a passage (13) for receiving the sleeve (12), disposed on the support means (5) along the second axis (11).

4. A device according to Claim 3, characterised in that the passage (13) and the sleeve (12) are formed with a female thread (15) and a complementary male thread (17) respectively, and in that the means (24, 25, 52, 67, 76) for adjusting the position of the guide means (12) with respect to the support means (5) along the second axis (11) comprise means (24, 25, 52) for adjusting the angular position of the sleeve (12) in the passage (13) about the second axis (11).

5. A device accoding to Claim 4, characterised in that the means (24, 25, 52) for adjusting the angular position of the sleeve (12) in the passage (13) comprise means (24, 25) for manually gripping the guide means (12), together with means (52) for snap-fitting the guide means (12) and support means (5) together in at least two angular positions of the sleeve (12) in the passage (13) about the second axis (11).

6. A device according to Claim 5, characterised in that the mutual snap-fitting means (52) comprise a snap-fit finger (57) which is juxtaposed to the sleeve (12) radially with respect to the second axis (11), and which is carried resiliently by the guide means (12), together with a collar element (14) disposed around the passage (13) and having at least two slots (53, 54, 55) for receiving the snap-fit finger (57), mutually offset circumferentially with reference to the second axis (11).

7. A device according to Claim 3, characterised in that at least the passage (13) or the sleeve (12) is smooth, and in that the means (24, 25, 52, 67, 76) for adjusting the position of the guide means (12) with respect to the support means (5) along the second axis (11) comprise means (67, 76) for adjusting the position of the sleeve (12) in sliding movement in the passage-(13) along the second axis (11).

8. A device according to Claim 7, characterised in that the means (67, 76) for adjusting the position of the sleeve (12) in sliding movement in the passage (13) include a lever (67) which is articulated on the sleeve (12) about a fourth axis (62) which is perpendicular to the second axis (11), being further articulated on the support means (5) about a fifth axis (68) parallel to the fourth axis (62), and means (76) for actuating the lever (67) in pivoting movement about the fifth axis (68).

9. A device according to Claim 8, characterised in that the actuating means (76) are selected from a group comprising hydraulic means and remote controlled mechanisms.

10. A device according to any one of Claims 7 to 9, characterised in that the passage (13) is a cylinder of revolution about the second axis (11), and in that means (52, 67) are provided for preventing rotation of the sleeve (12) about the second axis (11) within the said passage (13), and comprise a snap-fit finger (57) juxtaposed to the sleeve (12) radially with reference to the second axis (11) and carried by the guide means (12), and a collar element (14) disposed around the passage (13) and having a recess (43) for receiving the snap-fit finger (57), aligned parallel to the second axis (11).

FIG_1

FIG_2

FIG_3

FIG_4

FIG_5